# EUROPEAN PATENT APPLICATION

(11) **EP 2 698 291 A2**
(43) Date of publication of application: **19.02.2014**
(21) Application number: 13180301.7
(22) Date of filing: 13.08.2013
(51) Int. Cl.: B60S 1/04, B60S 1/24

(54) **Tube frame for mounting vehicle wiper mechanism**

(30) Priority: 17.08.2012 PL 40041912
(71) Applicant: Valeo Autosystemy SP. Z.O.O., 32-050 Skawina (PL)
(72) Inventor: Orzel, Wojciech, 32-050 Skawina (PL); Rod, Janusz, 30-399 Krakow (PL); Kurowski, Michal, 32-050 Skawina (PL)
(74) Representative: Léveillé, Christophe

(57) **Abstract**

The invention relates to a tube frame for mounting vehicle wiper mechanism to a body of the vehicle, with integrally formed at least one end part having a hole, for mounting said tube frame to the vehicle via a dampening device placed in this hole, said end part of the tube frame (1) is provided with at least one displacement limiting means (2, 3) able to limit a displacement of the end part of the tube frame (1) relative to the dampening device, wherein said displacement limiting means 82, 3) extends transversally to a plane in which said hole extends.

## Description

The object of the invention is a tube frame for mounting vehicle wiper mechanism. More particularly, the object of the invention is a tube frame for mounting vehicle wiper mechanism to a body of the vehicle, with integrally formed at least one end part having a hole, for mounting said tube frame to the vehicle via a dampening device placed in this hole. The invention is applicable in the automotive industry, in particular during installation of wipers in cars and trucks.

In typical, known in the art automotive wiper systems, the wipers are driven by a motor, usually electric one. Such a motor forms a mechanism using a pusher coupled through levers with shafts which drive wipers' arm, which mechanism thanks, to its appropriate construction, converts the rotating motion of the motor into the swinging motion of the wipers over the windscreen. Both the motor and the shaft hubs are usually mounted to a common tube frame (i.e. tube frame of the wiper mechanism). Such a mechanism, in turn, is mounted to the car, mounting points being often integrated with the shaft hubs, with the motor, or with a bracket.

Since the said pusher carries high loads, and it occurs that wipers need to work with a high frequency - in operation, there is a problem of longitudinal and lateral movements of the whole mechanism described above. These movements are undesirable and it is the constructors' aim to limit them maximally or - preferably - to eliminate them. Most often, stability of the mechanism is ensured by construction of three or more mounting points of the mechanism to the car. In the current art, solutions are known where the mounting points are integrated with the tube frame, when the shafts are at a considerable distance from the mounting points. Mounting of the said tube to the car must be strong enough (so that the whole mechanism driving the wipers could not break free) at the same time must be properly damped (to prevent knocking, noise and premature wear of the parts).

For mounting to the vehicle, the tube frame of the wiper mechanism has, at its one or both ends, holes, in which elastic dampers are placed (most often of elastomers, or mixtures thereof), through which, in turn, a ruff secured by a screw is passed, and thereby the tube frame of the mechanism is mounted to the car. Such a connection is durable and properly damped by rubber dampers, however it has a drawback, which consists in the fact that the tube frame tends to move in relation to the dampers. This causes movement of wiper arms in relation to the windscreen, unintended by the manufacturer and undesired by customers. In extreme cases, the elements of the wiper may knock against car parts or may not meet the legal requirements for wiping area. There is also a destruction of the elastic dampers, which are gradually sheared in by walls of the hole in the tube, in which they are located. This is particularly the case when loads acting on the dampers are relatively high (long wiper blades, long arms, high operating frequency, shafts distant from the motor, lack of rigid frame ensuring internal distribution of forces between the motor and the wiper arms).

In order to prevent movement between the damper and the rest of the mechanism, it is proposed to add flanges (also called bumpers) integral with the tube frame or with the bracket, designed to increase the contact surface between the tube frame or with the bracket and the damper, as well as to change the nature of the loads acting on the damper.

According to the invention, the tube frame for mounting vehicle wiper mechanism to a body of the vehicle, with integrally formed at least one end part having a hole, for mounting said tube frame to the vehicle via a dampening device placed in this hole, is **characterized in that** said end part of the tube frame is provided with at least one displacement limiting means able to limit a displacement of the end part of the tube frame relative to the dampening device, wherein said displacement limiting means extends transversally to a plane in which said hole extends.

Preferably, the displacement limiting means extend at least perpendicularly to the plane of the hole.

Preferably, the displacement limiting means is located in the direct vicinity of the hole.

Preferably, the displacement limiting means is in a form of a flat protrusion, integrally formed with the end part of the tube frame.

Preferably, the displacement limiting means is arranged such that it forms a bumper with respect to the dampening device.

In one embodiment of the invention, the dampening device comprises a grommet and a steel tube.

In case the dampening device comprises a grommet and a steel tube, and the displacement limiting means is in a form of a flat protrusion, integrally formed with the end part of the tube frame and is arranged such that it forms a bumper with respect to the dampening device - then preferably the flat protrusion abuts the grommet such that it forms a bumper for the grommet.

Preferably, the tube has one or both of the following displacement limiting means: outer displacement limiting means, located further from the center of mass of the tube frame than the hole, inner displacement limiting means, located closer to the center of mass of the tube frame than the hole.

Preferably, the displacement limiting means have the height of 2mm to 15mm, more preferably 2mm to 6mm.

Preferably, the displacement limiting means have the height lower than the diameter of the hole.

Preferably, the displacement limiting means have the length higher than the thickness of the wall of the tube frame.

Preferably, the displacement limiting means have the thickness which is the multiplicity of the thickness of the wall of the tube frame.

In one preferred embodiment of the invention, the tube has at least two displacement limiting means, located on the same side of the plane of the hole, in particular on the upper side of the plane of the hole or on the lower side of the plane of the hole.

In another preferred embodiment of the invention, the tube has at least two displacement limiting means, located on opposite sides of the plane of the hole.

Preferably, the tube has an outer displacement limiting means, extending along the edge of the hole, preferably having the angular span of 5° to 360°, more preferably from 20° to 150°, still more preferably from 100° do 150°.

Preferably, at least one of the displacement limiting means has the form of a set of two, three or more flat protrusions, located close to one another.

In such a case, preferably, individual ones of the said set of two, three or more flat protrusions, located close to one another, are arranged along the edge of the hole, and are preferably located on the upper side of the plane of the hole or on the lower side of the plane of the hole or simultaneously on the upper side of the plane of the hole and on the lower side of the plane of the hole.

In yet another preferred embodiment of the invention, the tube has two integrally formed end parts having a hole, for mounting said tube frame to the vehicle via a dampening device placed in this hole, wherein each of said end parts of the tube frame is provided with at least one displacement limiting means, able to limit a displacement of the end part of the tube frame relative to the dampening device and wherein said displacement limiting means extends transversally to a plane in which said hole extends.

The invention will now be further described in the preferred embodiments, with reference to the accompanying drawings, in which:
Fig. 1 shows a general view of the drive assembly of the vehicle wiper mechanism,
Fig. 2 shows a tube frame of the wiper mechanism according to the invention, with visible end parts for mounting to a vehicle (example 1),
Fig. 3 shows a close-up of the end part of the tube frame of Fig. 2, formed according to the invention,
Fig. 4 (a, b) - illustrates another exemplary configuration of the end part of the tube frame of the wiper mechanism according to the invention (example 2); (a) a bottom view, (b) a top view, and

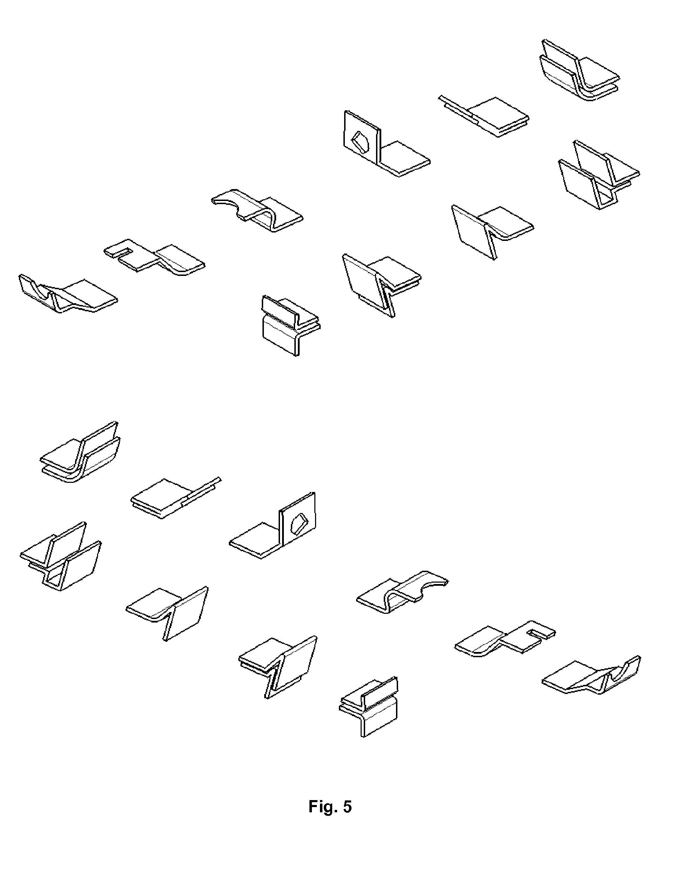

Fig. 5 illustrates exemplary configurations of displacement limiting means, able to limit a displacement of the end part of the tube frame relative to the dampening device, according to the invention.

In the drawings the following indications were used: 1 - tube frame of the wiper mechanism, 2 - outer bumper, 3 - inner bumper, 4 - grommet, 5 - motor, 6 - wiper drive mechanism, 7 - connecting member of the mechanism.

### Preferred embodiments of the invention

### Example 1

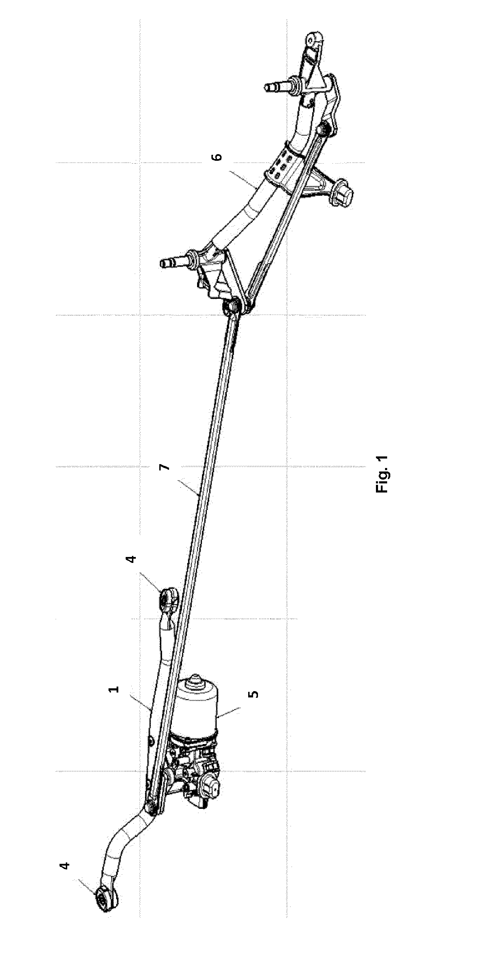

Fig. 1 shows a general view of the drive assembly of the vehicle wiper mechanism. In the drawing on can see the motor 5 and the wiper drive mechanism 6, connected by the connecting member 7 of the mechanism. The motor 5 and the connecting member 7 of the mechanism are mounted to the tube frame 1 of the mechanism, having end parts with holes. In the holes, grommets 4 are arranged, through which steel tubes are introduced, thereby mounting the whole assembly to the vehicle.

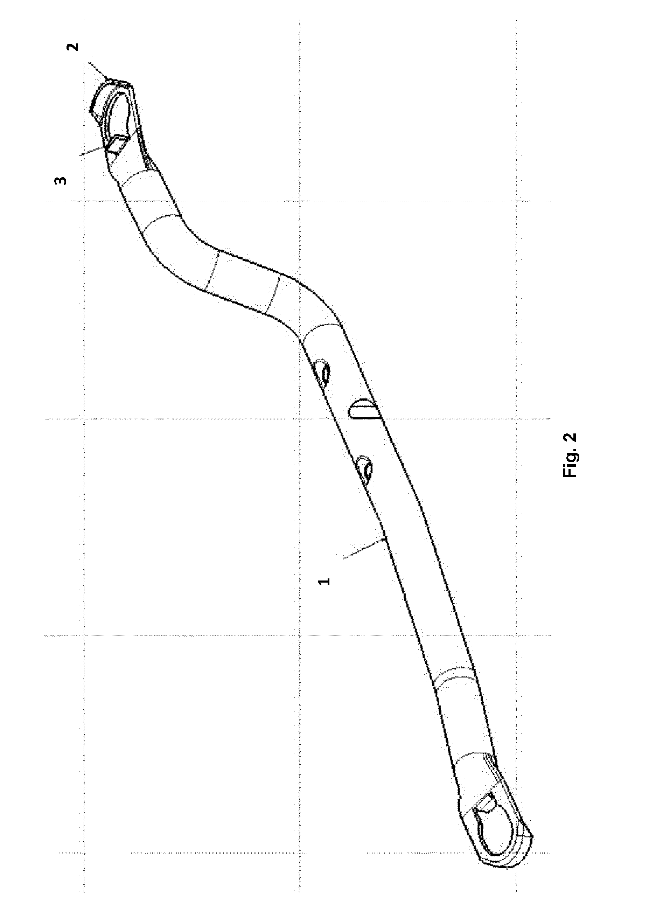

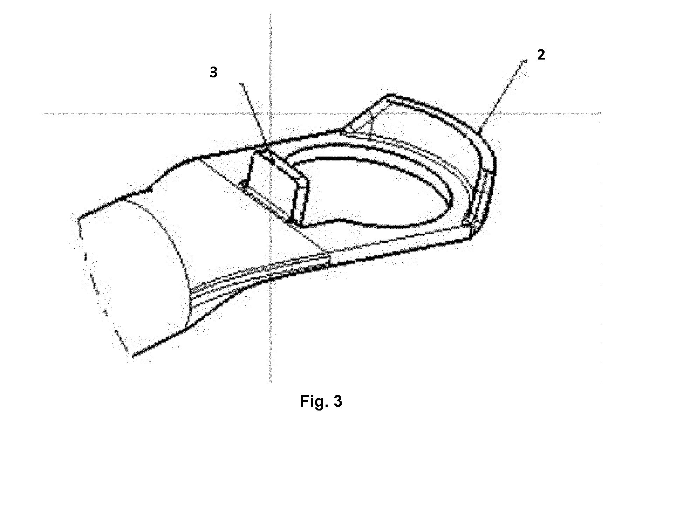

Fig. 2 shows a tube frame of the wiper mechanism according to the invention, with visible end parts for mounting to a vehicle, and Fig. 3 shows a close-up of the configuration of end part of the tube frame 1. The end parts of the tube frame 1 are formed integrally (as a single piece) with the tube frame 1. In the end part of the tube frame 1, there is a substantially circular hole, for arranging therein the grommet 4 and the steel tube (not shown in the drawing). In the end part of the tube frame, bumpers are visible: an outer bumper 2 and an inner bumper 3. The bumpers have the form of flat elements, arranged in the direct vicinity of the hole in the end part of the tube frame 1, extending perpendicularly to the plane of the hole. In the presented embodiment of the invention, height of the bumpers 2, 3 is 6mm, but this height may be 2mm to 6mm, and may be different - according to the dimensions of a specific tube of the mechanism. In the presented embodiment of the invention, there is an outer bumper 2 and an inner bumper 3, both of the same height and located on the same side of the hole in the end part of the tube frame 1. However, the bumpers do not have to be of the same height, and do not have to be located on the same side of the hole. One can provide embodiments, in which both bumpers 2, 3 are located on the upper side of the hole, both on the lower side of the hole, the inner bumper 3 is on the lower side of the hole, and the outer one 2 - on the upper side of the hole, or conversely. One can provide also embodiments, in which, there is only one bumper - that is the outer bumper 2 or the inner bumper 3.

In all these cases, the presence of a bumper or the bumpers provides additional supporting surface for the grommet 4, whereby the mounting of the tube frame of the mechanism to the vehicle is improved, while improving amortization and preventing premature wear or shear of the grommet 4. Optimally, the end part of the tube frame 1 of the mechanism has two bumpers (i.e. an outer one 2 and an inner one 3), which provides the best stability and amortization.

Furthermore, with reference to Fig. 3, it is noted that although the inner bumper 3 runs along a straight line, the outer bumper 2 runs along a portion of a circle, surrounding a part of the substantially circular hole in the end part of the tube frame 1 of the mechanism. This configuration of the outer bumper 2 provides additional stability of the whole mechanism, regarding not only longitudinal movements (i.e. along the tube frame 1 of the mechanism), but also - in an appropriate range of angles - lateral movements (i.e. in a direction perpendicular to the tube frame 1 of the mechanism).

### Example 2

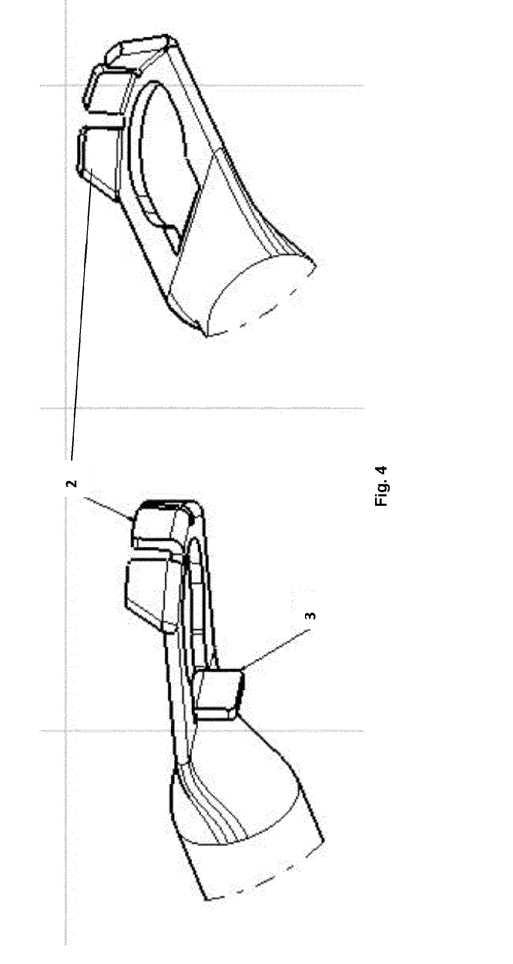

Fig. 4 illustrate other exemplary configuration of the bumpers present on the end part of the tube frame 1 of the wiper mechanism according to the invention. For a complete picture, a bottom view (a) and a top view (b) are presented.

Although in the embodiment shown in Fig. 3, the outer bumper 2 is a single element, in the embodiment shown in Fig. 4, the outer bumper 2 was made in the form of three flat elements. These flat elements are arranged along a portion of the circle, thereby providing additional stability of the whole mechanism, regarding not only longitudinal movements (i.e. along the tube frame 1 of the mechanism), but also - in an appropriate range of angles - lateral movements (i.e. in a direction perpendicular to the tube frame 1 of the mechanism) - as in the case of the outer bumper 2 curved along a circle, shown in Fig. 3.

Division of the bumper 2 into three parts is not limiting - there may be - according to the needs and the dimensions of the specific tube frame of the mechanism - two or more than three (four, five, etc.) such parts. Also, the shape of parts shown in Fig. 4 may be different.

Furthermore, for the embodiment shown in Fig. 4, all the remarks mentioned in example 1 are applicable, namely:

In the presented embodiment of the invention, height of the bumpers 2, 3 is 6mm, but this height may be 2mm to 6mm, and may be different - according to the dimensions of a specific tube of the mechanism. In the presented embodiment of the invention, there is an outer bumper 2 and an inner bumper 3, both of the same height and located on the same side of the hole in the end part of the tube frame. However, the bumpers do not have to be of the same height, and do not have to be located on the same side of the hole. One can provide embodiments, in which both bumpers 2, 3 are located on the upper side of the hole, both on the lower side of the hole, the inner bumper 3 is on the lower side of the hole, and the outer one 2 - on the upper side of the hole, or conversely. One can provide also embodiments, in which, there is only one bumper - that is the outer bumper 2 or the inner bumper 3.

## Claims

1. A tube frame for mounting vehicle wiper mechanism to a body of the vehicle, with integrally formed at least one end part having a hole, for mounting said tube frame to the vehicle via a dampening device placed in this hole, **characterized in that** said end part of the tube frame (1) is provided with at least one displacement limiting means (2, 3) able to limit a displacement of the end part of the tube frame (1) relative to the dampening device, wherein said displacement limiting means (2, 3) extends transversally to a plane in which said hole extends.

2. The tube according to claim 1, **characterized in that** the displacement limiting means (2, 3) extend at least perpendicularly to the plane of the hole.

3. The tube according to claim 1 or 2, **characterized in that** the displacement limiting means (2, 3) is located in the direct vicinity of the hole.

4. The tube according to any one of the preceding claims, **characterized in that** the displacement limiting means (2, 3) is in a form of a flat protrusion, integrally formed with the end part of the tube frame (1).

5. The tube according to any one of the preceding claims, **characterized in that** the displacement limiting means (2, 3) is arranged such that it forms a bumper with respect to the dampening device.

6. The tube according to any one of the preceding claims, **characterized in that** the dampening device comprises a grommet (4) and a steel tube.

7. The tube according to claim 6, when dependent on claim 5, when dependent on claim 4, **characterized in that** the flat protrusion abuts the grommet (4) such that it forms a bumper for the grommet (4).

8. The tube according to any one of the preceding claims, **characterized in that** it has one or both of the following displacement limiting means: outer displacement limiting means (2), located further from the centre of mass of the tube frame (1) than the hole, inner displacement limiting means (3), located closer to the centre of mass of the tube frame (1) than the hole.

9. The tube according to any one of the preceding claims, **characterized in that** the displacement limiting means have the height of 2mm to 15mm, preferably 2mm to 6mm.

10. The tube according to any one of the preceding claims, **characterized in that** the displacement limiting means have the height lower than the diameter of the hole.

11. The tube according to any one of the preceding claims, **characterized in that** the displacement limiting means have the length higher than the thickness of the wall of the tube frame (1).

12. The tube according to any one of the preceding claims, **characterized in that** the displacement limiting means have the thickness which is the multiplicity of the thickness of the wall of the tube frame (1).

13. The tube according to any one of the preceding claims, **characterized in that** it has at least two displacement limiting means (2, 3), located on the same side of the plane of the hole, in particular on the upper side of the plane of the hole or on the lower side of the plane of the hole.

14. The tube according to any one of the preceding claims, **characterized in that** it has at least two displacement limiting means (2, 3), located on opposite sides of the plane of the hole.

15. The tube according to any one of the preceding claims, **characterized in that** it has an outer displacement limiting means (2), extending along the edge of the hole, preferably having the angular span of 5º to 360º, more preferably from 20º to 150º, still more preferably from 100º do 150º.

16. The tube according to any one of the preceding claims, **characterized in that** at least one of the displacement limiting means (2) has the form of a set of two, three or more flat protrusions, located close to one another.

17. The tube according to claim 16, **characterized in that** individual of said set of two, three or more flat protrusions, located close to one another, are arranged along the edge of the hole, and are preferably located on the upper side of the plane of the hole or on the lower side of the plane of the hole or simultaneously on the upper side of the plane of the hole and on the lower side of the plane of the hole.

18. The tube according to any one of the preceding claims, **characterized in that** it has two integrally formed end parts having a hole, for mounting said tube frame (1) to the vehicle via a dampening device placed in this hole, wherein each of said end parts of the tube frame (1) is provided with at least one displacement limiting means (2, 3,) able to limit a displacement of the end part of the tube frame (1) relative to the dampening device and wherein said displacement limiting means (2, 3) extends transversally to a plane in which said hole extends.
